(19) Europäisches Patentamt
European Patent Office
Office européen des brevets

(11) **EP 4 017 679 B1**

(12) **EUROPÄISCHE PATENTSCHRIFT**

(45) Veröffentlichungstag und Bekanntmachung des Hinweises auf die Patenterteilung:
**15.01.2025  Patentblatt 2025/03**

(21) Anmeldenummer: **20780909.6**

(22) Anmeldetag: **21.08.2020**

(51) Internationale Patentklassifikation (IPC):
*F16C 32/04* (2006.01)     *B23Q 1/25* (2006.01)
*B23Q 1/38* (2006.01)     *F16C 29/02* (2006.01)

(52) Gemeinsame Patentklassifikation (CPC):
**B23Q 1/38; B23Q 1/25; F16C 29/025;**
**F16C 32/0402; F16C 32/0472;** F16C 2322/39

(86) Internationale Anmeldenummer:
**PCT/DE2020/000191**

(87) Internationale Veröffentlichungsnummer:
**WO 2021/037295 (04.03.2021 Gazette 2021/09)**

(54) **HOCHPRÄZISIONS-WERKZEUGMASCHINE MIT LINEAREM ANTRIEBS- UND FÜHRUNGSLAGER**

HIGH PRECISION MACHINE TOOL HAVING LINEAR DRIVE- AND GUIDE BEARING

MACHINE-OUTIL DE HAUTE PRÉCISION AYANT UN PALIER D'ENTRAÎNEMENT ET DE GUIDAGE LINÉAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **23.08.2019  DE 102019005966**

(43) Veröffentlichungstag der Anmeldung:
**29.06.2022  Patentblatt 2022/26**

(73) Patentinhaber: **Kern Microtechnik GmbH**
**82438 Eschenlohe (DE)**

(72) Erfinder:
• **FRITZ, Matthias**
**82438 Eschenlohe (DE)**
• **MAIER, Christian**
**82439 Grossweil (DE)**

(74) Vertreter: **Bedenbecker, Markus**
**Feldstrasse 22**
**82131 Gauting (DE)**

(56) Entgegenhaltungen:
EP-A1- 0 647 788     EP-A2- 1 116 549
DE-A1- 19 803 952     DE-T2- 69 106 165
DE-U1- 29 706 669

**Beschreibung**

Die vorliegende Erfindung betrifft eine Hochpräzisions-Werkzeugmaschine mit mindestens einem Linearantriebsmittel gemäß dem Oberbegriff des Anspruchs 1.

Aus der EP 1 116 549 A2 ist eine Werkzeugmaschine mit einem Linearantriebsmittel zum Ausführen einer relativen linearen Bewegung zweier an der Werkzeugmaschine befindlichen Maschinenbauteile bekannt, wobei das Linearantriebsmittel als lineares Antriebs- und Führungslager ausgebildet ist. Diese bekannte Werkzeugmaschine weist auf:

- einen Linearmotor, der einen an einem der Maschinenbauteile angeordneten Magneten und eine an dem anderen Maschinenbauteil angeordnete, mit dem Magneten wirkverbundene Spule aufweist, wobei der Magnet und die Spule eingerichtet sind, eine gegenseitige Anziehungskraft und eine mindestens zeitweise relative Bewegung zueinander auszuüben,
- ein an einem der beiden Maschinenbauteile angeordnetes, mit dem anderen Maschinenbauteil wirkverbundenes hydrostatisches Fluidlager, wobei das hydrostatische Fluidlager eine der Anziehungskraft entgegengerichtete Abstoßungskraft ausübt,
- wobei eines der Maschinenbauteile, im Querschnitt betrachtet, eine erste Auflagefläche, eine hiervon beabstandete zweite Auflagefläche und einen zwischen diesen befindlichen ersten Aufnahmebereich aufweist, und das andere Maschinenbauteil einen ersten Aufnahmeabschnitt, einen hiervon beabstandeten zweiten Aufnahmeabschnitt sowie einen zwischen diesen befindlichen zweiten Aufnahmebereich aufweist, wobei in dem ersten Aufnahmeabschnitt ein erstes, der ersten Auflagefläche gegenüberliegendes hydrostatisches Fluidlager, in dem zweiten Aufnahmeabschnitt ein zweites, der zweiten Auflagefläche gegenüberliegendes hydrostatisches Fluidlager, in dem ersten Aufnahmebereich der Magnet und in dem zweiten Aufnahmebereich die Spule dem ersten Aufnahmebereich gegenüberliegend aufgenommen sind,
- wobei die beiden Maschinenbauteile jeweils eine erste virtuelle, zueinander parallele Ebene aufweisen, in der sich der Linearmotor und das hydrostatische Fluidlager befinden, und
- eine zu der jeweiligen ersten virtuellen Ebene geneigte, insbesondere orthogonale, zweite virtuelle Ebene, in der mindestens ein lineares Führungsmittel ausgebildet ist.

Aus der DE 691 06 165 T2 ist eine Führungsvorrichtung für ein Präzisionsbearbeitungsgerät bekannt, bei der zwei Plattformen unabhängig voneinander bewegt werden können. Eine solche Plattform umfasst ein erstes Maschinenbauteil mit einer im Wesentlichen U-förmigen Gestalt, an dessen äußeren Seitenflächen jeweils ein Fluidlager vorgesehen ist. Das erste Maschinenbauteil ist in einem zweiten Maschinenbauteil aufgenommen, das seinerseits aus einer Platte, zwei einander gegenüberliegenden Lagerbefestigungsplatten und einer Befestigungsplatte besteht. Die genannten Bauteile umhüllen das erste Maschinenbauteilbauteil. Mit Hilfe eines an dem ersten Maschinenbauteil und dem zweiten Maschinenbauteil vorgesehenen Linearantriebes kann das zweite Maschinenbauteil gegenüber dem ersten Maschinenbauteil bewegt werden. Auf der Unterseite der Befestigungsplatte schließlich befinden sich weitere Fluidlager, die zum einen die Einhaltung eines gewünschten Abstandes des zweiten Maschinenbauteils gegenüber einer feststehenden Basis, zum anderen dessen Bewegung gegenüber dem zweiten Maschinenbauteil ermöglichen.

Aus der DE 198 03 952 A1 ist ein Linearmotor mit einem zwischen 5 $\mu$m und 20 $\mu$m großem Luftspalt bekannt.

Aus der EP 0 647 788 A1 ist eine Vorrichtung zur Abstützung und Bewegung eines als Tara-Gewichtes ausgebildeten zweites Maschinenbauteils bekannt, bei der ein erstes Maschinenbauteil im Wesentlichen orthogonal abragende Vorsprünge aufweist, die von korrespondierenden, hierzu beabstandeten Vorsprüngen des zweiten Maschinenbauteils umgeben sind. Jeder der Vorsprünge weist seitlich jeweils Permanentmagnete bzw. Spulen derart auf, dass zwischen ihnen jeweils ein Linearantrieb ausgebildet ist. An den jeweiligen dem zweiten Maschinenbauteil zugewandten Seiten der jeweiligen Vorsprünge des ersten Maschinenbauteils sind Fluidlager vorgesehen, mit denen das zweiten Maschinenbauteil gegenüber dem ersten Maschinenbauteil in vertikaler Richtung abgestützt ist. Der Linearantrieb kann über eine Kühlmittelleitung gekühlt werden.

Aus der DE 297 06 669 U1 schließlich ist eine Bearbeitungsvorrichtung mit einem eine horizontal auf einer Ebene verschiebbare Werkstückaufnahme und einen Antrieb aufweisenden Verschiebetisch mit einem umlaufenden Randbereich bekannt. Der Antrieb umfasst einen Linearmotor, der mit einem Kühlmittel beaufschlagt werden kann.

Dem Grundsatz nach sind Hochpräzisions-Werkzeugmaschinen mit Linearantriebsmitteln zum Ausführen einer zueinander relativen Bewegung zweier in der Hochpräzisions-Werkzeugmaschine befindlichen Maschinenbauteilen an sich bekannt. Sie dienen dazu, die beiden Maschinenbauteile zuverlässig und präzise in Bewegung zu versetzen, zu führen und im Stillstand zu halten. So bietet die Anmelderin dieses Patentes ein eine gattungsgemäße Hochpräzisions-Werkzeugmaschine umfassendes Bearbeitungszentrum unter der eingetragenen deutschen Marke KERN Pyramid Nano (amtliche Eintragungsnummer 30676385) an, mit dem zwei Maschinenbauteile in einem Abstand von 20 $\mu$m oder mehr relativ zueinander bewegt werden können.

Aufgabe der vorliegenden Erfindung ist es, eine Hochpräzisions-Werkzeugmaschine anzugeben, deren Präzision gegenüber den aus dem Stand der Technik bekannten Werkzeugmaschinen weiter verbessert ist, ohne ihre gestalterische Komplexität zu erhöhen.

Die Aufgabe wird erfindungsgemäß mit den Merkmalen des Anspruchs 1 gelöst. Weitere Ausgestaltungen der Erfindung ergeben sich aus den abhängigen Ansprüchen.

Die erfindungsgemäße Hochpräzisions-Werkzeugmaschine kann insbesondere als spanende Hochpräzisions-Werkzeugmaschine, insbesondere als Hochpräzisions-Fräsmaschine, ausgebildet sein. Sie kann des Weiteren ein Solitär, ein Teil eines Bearbeitungszentrums, ein Teil einer flexiblen Fertigungszelle oder ein Teil eines flexiblen Fertigungssystems sein. So ist es insbesondere möglich, die Hochpräzisions-Werkzeugmaschine mit einem Werkzeugkabinett einschließlich Werkzeugwechsler und/oder mit einem Werkstückwechsler zu versehen.

Das mindestens eine Linearantriebsmittel der erfindungsgemäßen Hochpräzisions-Werkzeugmaschine zum Ausführen einer relativen linearen Bewegung zweier an der Hochpräzisions-Werkzeugmaschine befindlichen Maschinenbauteile ist als lineares Antriebs- und Führungslager ausgebildet.

Als Maschinenbauteile sind solche zueinander benachbarten Bauteile der Hochpräzisions-Werkzeugmaschine zu verstehen, deren relative Bewegung zueinander und/oder zeitweiser Stillstand für eine Bearbeitung eines Werkstückes erforderlich oder sinnvoll ist. So können einzelne, mehrere oder alle nachfolgenden Paarungen zweier Maschinenbauteile mit einem linearen Antriebs- und Führungslager versehen werden:

- Eines der Maschinenbauteile kann als Maschinenständer der Hochpräzisions-Werkzeugmaschine, das andere Maschinenbauteil kann als ein hierzu benachbarter Querschlitten der Hochpräzisions-Werkzeugmaschine ausgebildet sein.

- Eines der Maschinenbauteile kann als Maschinenständer der Hochpräzisions-Werkzeugmaschine, das andere Maschinenbauteil kann als ein hierzu benachbarter Längsschlitten der Hochpräzisions-Werkzeugmaschine ausgebildet sein.

- Eines der Maschinenbauteile kann als Maschinenständer der Hochpräzisions-Werkzeugmaschine, das andere Maschinenbauteil kann als ein hierzu benachbarter Vertikalschlitten der Hochpräzisions-Werkzeugmaschine ausgebildet sein.

- Eines der Maschinenbauteile kann als Längsschlitten der Hochpräzisions-Werkzeugmaschine, das andere Maschinenbauteil kann als ein hierzu benachbarter Querschlitten der Hochpräzisions-Werkzeugmaschine ausgebildet sein.

- Eines der Maschinenbauteile kann als Vertikalschlitten der Hochpräzisions-Werkzeugmaschine, das andere Maschinenbauteil kann als ein hierzu benachbarter Querschlitten der Hochpräzisions-Werkzeugmaschine ausgebildet sein.

- Eines der Maschinenbauteile kann als Vertikalschlitten der Hochpräzisions-Werkzeugmaschine, das andere Maschinenbauteil kann als ein hierzu benachbarter Längsschlitten der Hochpräzisions-Werkzeugmaschine ausgebildet sein.

Mithin kann eine erfindungsgemäße Hochpräzisions-Werkzeugmaschine insbesondere ein erstes lineares Antriebs- und Führungslager zum Ausführen einer relativen linearen Bewegung zwischen einem Maschinenständer und einem Querschlitten, ein weiteres lineares Antriebs- und Führungslager zum Ausführen einer relativen linearen Bewegung zwischen dem Querschlitten und einem Längsschlitten sowie ein drittes lineares Antriebs- und Führungslager zum Ausführen einer relativen linearen Bewegung zwischen dem Längsschlitten und einem Vertikalschlitten aufweisen.

Alternativ kann eine erfindungsgemäße Hochpräzisions-Werkzeugmaschine insbesondere ein erstes lineares Antriebs- und Führungslager zum Ausführen einer relativen linearen Bewegung zwischen einem Maschinenständer und einem Längsschlitten, ein weiteres lineares Antriebs- und Führungslager zum Ausführen einer relativen linearen Bewegung zwischen einem Querschlitten und dem Längsschlitten sowie ein drittes lineares Antriebs- und Führungslager zum Ausführen einer relativen linearen Bewegung zwischen dem Längsschlitten und einem Vertikalschlitten aufweisen.

Jedes der genannten Maschinenbauteile kann aus einer Aluminiumlegierung gefertigt sein. Alternativ kann ein als Maschinenständer ausgebildetes Maschinenbauteil aus einem Ultrahochleistungsbeton (UHPC - Ultra High Performance Concrete) gefertigt sein.

Weiter kann mindestens eines der Maschinenbauteile thermosymmetrisch ausgebildet sein.

Das an sich bekannte lineare Antriebs- und Führungslager zum Ausführen einer relativen linearen Bewegung zweier Maschinenbauteile weist mindestens einen Linearmotor auf, der mindestens einen an einem der Maschinenbauteile angeordneten Magneten und mindestens eine an dem anderen Maschinenbauteil angeordnete Spule aufweist. Die Spule kann dem Grundsatz nach ohne Kern ausgebildet sein. In vorteilhafter Weise umfasst die Spule jedoch einen Kern, insbesondere einen mit einem Ferrit ausgebildeten Kern, wodurch ein vergleichsweise einfacher Aufbau und eine besonders gute technische Wirkung der Spule erzielt werden können. Der Magnet, bevorzugt ein Permanentmagnet, und die Spule sind miteinander wirkverbunden und derart eingerichtet, dass sie eine gegenseitige Anziehungskraft und eine mindestens zeitweise relative Bewegung zueinander ausüben können.

Ferner ist zum Ausführen einer relativen linearen Bewegung zweier Maschinenbauteile in an sich bekannter Weise mindestens ein an einem der beiden Maschinenbauteile angeordnetes, mit dem anderen Maschinenbauteil wirkverbundenes hydrostatisches Fluidlager vorgesehen. Dieses ist derart eingerichtet, dass es eine der Anziehungskraft entgegengerichtete Abstoßungskraft ausübt, so dass zwischen den beiden Maschinenbauteilen ein erster Lagerspalt ausgebildet werden kann. Es versteht sich, dass die Anziehungskraft und die Abstoßungskraft gleich groß sind, wenn ein erster Lagerspalt konstanter Höhe zwischen den beiden zueinander beweglich angeordneten Maschinenbauteilen eingestellt werden soll. Die Beschleunigung, Geschwindigkeit und Position eines Maschinenbauteils in einer Vorschubrichtung kann bzw. können dem Grundsatz nach durch eine Steuerung bzw. Regelung des durch die oben genannte Spule fließenden Stromes eingestellt werden. Die Beschleunigung, Geschwindigkeit und Position des Maschinenbauteils quer zur der Vorschubrichtung kann dem Grundsatz nach durch eine Durchflusssteuerung bzw. Durchflussregelung des hydraulischen Stromes, mithin des Durchflusses des Fluides, durch das hydrostatische Fluidlager eingestellt werden. Eine Steuerung oder Regelung der Höhe des Lagerspaltes, der Beschleunigung, der Geschwindigkeit und/oder der relativen Bewegungsrichtung der beiden Maschinenbauteile kann alternativ oder kumulativ in einfacher Weise durch eine geeignete Anpassung des durch die Spule fließenden, nicht zuletzt auf den Magneten abgestimmten elektrischen Stromes erfolgen.

Wie ebenfalls an sich bekannt weist eines der Maschinenteile, im Querschnitt betrachtet, eine erste Auflagefläche, eine hiervon beabstandete zweite Auflagefläche und einen zwischen diesen befindlichen ersten Aufnahmebereich auf. Das andere Maschinenbauteil weist dem gegenüber einen ersten Aufnahmeabschnitt, einen hiervon beabstandeten zweiten Aufnahmeabschnitt sowie einen zwischen diesen befindlichen zweiten Aufnahmebereich auf. In dem ersten Aufnahmeabschnitt ist mindestens ein erstes, der ersten Auflagefläche gegenüberliegendes hydrostatisches Fluidlager, in dem zweiten Aufnahmeabschnitt ein zweites, der zweiten Auflagefläche gegenüberliegendes hydrostatisches Fluidlager, in dem ersten Aufnahmebereich der mindestens eine Magnet und in dem zweiten Aufnahmebereich die mindestens eine Spule aufgenommen, wobei der Magnet und die Spule einander gegenüberliegen.

Wie an sich bekannt weisen die beiden Maschinenbauteile der erfindungsgemäßen Hochpräzisions-Werkzeugmaschine jeweils eine erste virtuelle, zueinander parallele Ebene auf, in der sich der Linearmotor und das hydrostatische Fluidlager unter Ausbildung des ersten Lagerspaltes erstrecken.

Ferner ist eine zu der ersten virtuellen Ebene geneigte zweite virtuelle Ebene vorgesehen, in der mindestens ein lineares Führungsmittel ausgebildet ist. Der entsprechende Neigungswinkel kann jede geeignete Größe aufweisen, insbesondere 15°, 30° oder 45°. Insbesondere kann vorgesehen sein, dass eine zu der jeweiligen ersten virtuellen Ebene orthogonale zweite virtuelle Ebene existiert, in der mindestens ein lineares Führungsmittel ausgebildet ist. Mithin beträgt der Neigungswinkel 90°, wodurch eine Sperrung der Freiheitsgrade der beiden Maschinenbauteile erzielt ist.

Gemäß der hier vorliegenden Erfindung ist der erste Aufnahmebereich gegenüber der ersten Auflagefläche und/oder der zweiten Auflagefläche vertieft ausgebildet. Hierdurch ist in vorteilhafter Weise ein Kanal geschaffen, in dem sich aus dem hydrostatischen Fluidlager austretendes, als Flüssigkeit ausgebildetes Fluid, insbesondere Öl, sammeln kann. Durch eine geeignete Gestaltung der Kanaloberfläche und/oder einen optionalen Ablass kann das genannte Fluid auf einfache Weise von dem Magneten entfernt werden.

Erfindungsgemäß weist das genannte lineare Führungsmittel ferner mindestens ein Fluidlagermittel und ein diesem entgegenwirkendes Magnetlagermittel auf. Hierdurch ist in vorteilhafter Weise eine einfach herzustellende und im Betrieb einstellbare Lagerung des linearen Antriebs- und Führungslagers geschaffen, so dass die beiden Maschinenbauteile insbesondere in zwei zueinander orthogonal ausgerichteten Raumebenen präzise und leicht geführt werden können. Es versteht sich, dass die durch das Fluidlagermittel und das Magnetlagermittel auf das Maschinenbauteil oder die Maschinenbauteile einwirkenden, gegeneinander gerichteten Kräfte gleich groß sind, um das lineare Führungsmittel im Gleichgewicht zu halten.

Schließlich beträgt die Höhe des ersten Lagerspaltes zum Ausführen einer relativen linearen Bewegung zweier Maschinenbauteile erfindungsgemäß mehr als 0 μm und im Wesentlichen 10 μm oder weniger. Mit anderen Worten gilt, wenn die Höhe des ersten Lagerspaltes mit H1 bezeichnet wird, im Wesentlichen folgende Beziehung:

$$0\ \mu m < H1 \leq 10\ \mu m$$

Aufgrund der hier vorgeschlagenen Ausbildung des Linearmotors nach Art eines Synchron-Linearmotors und seiner Wirkverbindung mit mindestens einem hydrostatischen Fluidlager ist in vorteilhafter Weise ein lineares Antriebs- und Führungslager mit einem hohen Wirkungsgrad bei gleichzeitig gutem Wärmehaushalt geschaffen, das darüber hinaus eine sehr hohe Präzision aufweist. Die relative Bewegung der beiden Maschinenbauteile kann derart erfolgen, dass sich eines der beiden Maschinenbauteile bewegt, während sich das andere Maschinenbauteil nicht bewegt, oder dass sich beide Maschinenbauteile gleichzeitig bewegen. Mit anderen Worten ist in vorteilhafter Weise vorgesehen, dass sich das eine Maschinenbauteil bewegt, während das andere Maschinenbauteil in seiner Position verharrt, oder dass das eine Maschinenbauteil in seiner Position verharrt, während sich das andere Maschinenbauteil diesem gegenüber bewegt, oder dass sich sowohl das eine Maschinenbauteil als auch das andere Maschinenbauteil gleichzeitig gegeneinander bewegen.

Die erfindungsgemäße Hochpräzisions-Werkzeugmaschine weist das genannte lineare Führungsmittel mit mindestens einem Fluidlagermittel und einem diesem entgegenwirkenden Magnetlagermittel auf. Hierdurch ist eine einfach herzustellende und im Betrieb einstellbare Lagerung des linearen Antriebs- und Führungslagers geschaffen, so dass die beiden Maschinenbauteile in zwei zueinander insbesondere orthogonal ausgerichteten Raumebenen präzise und leicht geführt werden können. Es versteht sich, dass die durch das Fluidlagermittel und das Magnetlagermittel auf das Maschinenbauteil oder die Maschinenbauteile einwirkenden, gegeneinander gerichteten Kräfte gleich groß sind, um das lineare Führungsmittel im Gleichgewicht zu halten.

Eine besonders einfacher Aufbau des linearen Antriebs- und Führungslagers, und somit der erfindungsgemäßen Hochpräzisions-Werkzeugmaschine, ist geschaffen, wenn das Fluidlagermittel und das Magnetlagermittel an ein und demselben Maschinenbauteil angeordnet und mit dem anderen Maschinenbauteil wirkverbunden sind.

Zum Zwecke eines besonders einfachen Aufbaus des linearen Antriebs- und Führungslagers und dessen verbesserte Führungspräzision weist das den ersten Aufnahmeabschnitt und den zweiten Aufnahmeabschnitt aufweisende Maschinenbauteil in vorteilhafter Weise einen ersten abragenden Abschnitt und einen dem ersten abragenden Abschnitt gegenüberliegenden zweiten abragenden Abschnitt auf. In dem ersten abragenden Abschnitt ist das Fluidlagermittel angeordnet. In dem zweiten abragenden Abschnitt ist das Magnetlagermittel angeordnet, wobei die beiden abragenden Abschnitte dem anderen Maschinenbauteil unter Ausbildung eines zweiten Lagerspaltes benachbart sind.

In vorteilhafter Weise ist ein besonders einfach herstellbares lineares Antriebs- und Führungslager geschaffen, wenn das Magnetlagermittel eine an dem einen Maschinenbauteil befindliche Magnetleiste und eine an dem anderen Maschinenbauteil befindliche, bevorzugt ferromagnetische, Gegenleiste aufweist, die eingerichtet sind, eine Abstoßungskraft aufeinander auszuüben. Es versteht sich jedoch, dass alternativ oder kumulativ mindestens ein veränderliches oder nicht veränderliches elektromagnetisches Mittel vorgesehen sein kann, um die erforderliche Abstoßungskraft einzustellen.

Gemäß einer bevorzugten Ausführungsform entspricht das Fluidmittel einem der vorgesehenen hydrostatischen Fluidlager. Mit anderen Worten kann ein Fluidmittel in seinem Aufbau einem hydrostatischen Fluidlager entsprechen, wodurch in vorteilhafter Weise die Fertigungskosten der erfindungsgemäßen Vorrichtung im Sinne einer Gleichteilestrategie reduziert werden können. Es versteht sich, dass auch sämtliche in dem linearen Antriebs- und Führungslager befindlichen Fluidmittel und hydrostatischen Fluidlager einen identischen Aufbau aufweisen können, wodurch sich der zuvor genannte Vorteil vervielfacht.

Das lineare Antriebs- und Führungslager zeichnet sich weiterhin durch eine Wirkverbindung mit mindestens einem Temperierungsmittel aus. Hierdurch ist es möglich, ein einzelnes Teil, mehrere Teile oder alle der zuvor offenbarten Teile der erfindungsgemäßen Hochpräzisions-Werkzeugmaschine, und insbesondere des linearen Antriebs- und Führungslagers, derart zu temperieren, insbesondere zu kühlen, dass dessen bzw. deren temperaturbedingten Verformungen kompensiert bzw. auf ein erlaubtes Maß reduziert werden können. So können in vorteilhafter Weise in einem oder den beiden Maschinenbauteilen, an dem Linearmotor, insbesondere an oder im Bereich der Spule und/oder des Magneten, im Bereich des hydrostatischen Fluidlagers und/oder im Bereich des Fluidlagermittels ein Temperierungsfluid führende Leitungen vorgesehen sein. Weiter ist es in vorteilhafter Weise möglich, an mindestens einer der zuvor offenbarten Stellen mindestens ein Temperaturmessmittel anzuordnen.

Das Temperierungsmittel kann sich dem Grundsatz nach in der Hochpräzisions-Werkzeugmaschine selbst befinden. Gemäß einer besonders bevorzugten Ausführungsform ist das Temperierungsmittel von der dieser beabstandet positioniert, so dass die zur Temperierung erforderlichen Aggregate, insbesondere deren Kompressor(en) und Pumpe(n) für das Temperierungsfluid , vibrationsisoliert von dem ersten bzw. zweiten Maschinenbauteil angeordnet sind, um die Genauigkeit der Hochpräzisions-Werkzeugmaschine weiter zu erhöhen.

Weitere erfindungsgemäße Merkmale und Vorteile sind in den beigefügten, nicht einschränkenden Ausführungsbeispielen der vorliegenden Erfindung unter Bezugnahme auf die beigefügte, nicht maßstäbliche Zeichnung dargestellt. Dabei ist

Fig. 1     eine symbolische und vereinfachte Seitenansicht auf eine erfindungsgemäße Hochpräzisions-Werkzeugmaschine,

Fig. 2     eine symbolische und vereinfachte Querschnittsansicht durch ein lineares Antriebs- und Führungslager,

Fig. 3     eine zu der in Fig. 2 gezeigten Ausführungsform alternative Ausführungsform, und

Fig. 4     eine vereinfachte perspektivische Unteransicht auf ein gegenüber dem in Fig. 2 gezeigten Maschinenbauteil alternativen Maschinenbauteil.

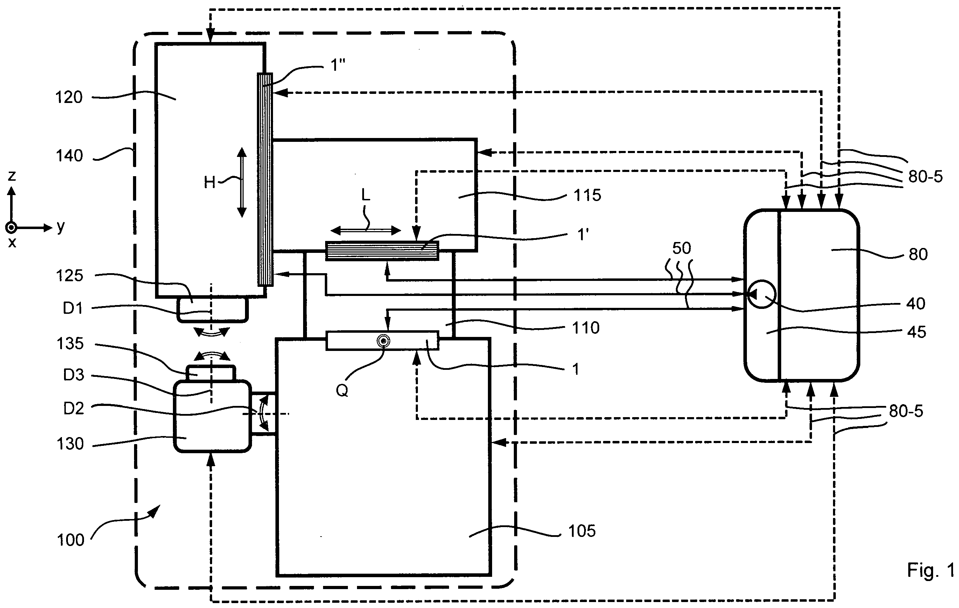

Figur 1 ist eine symbolische und vereinfachte Seitenansicht auf eine erfindungsgemäße Hochpräzisions-Werkzeugmaschine 100, die gemäß dem hier gezeigten Ausführungsbeispiel in Fahrständerbauweise ausgebildet ist. Sie umfasst einen Maschinenständer 105, einen diesem gegenüber in einer Querrichtung bzw. Linearachse Q verfahrbaren Querschlitten 110, einen gegenüber dem Querschlitten 110 in einer Längsrichtung bzw. Linearachse L verfahrbaren Längsschlitten 115 sowie einen gegenüber dem Längsschlitten 115 in einer Hochrichtung bzw. Linearachse H verfahrbaren Vertikalschlitten 120.

Die Querrichtung Q verläuft gemäß einer hier gewählten Konvention parallel zu einer x-Achse eines an sich bekannten kartesischen Koordinatensystems und damit aus der Papierebene der Figur 1 heraus. Die Längsrichtung L verläuft gemäß der hier gewählten Konvention parallel zu einer y-Achse des kartesischen Koordinatensystems und damit in horizontaler Richtung der Figur 1. Die Hochrichtung H verläuft gemäß der hier gewählten Konvention parallel zu der z-Achse des kartesischen Koordinatensystems und damit in vertikaler Richtung der Figur 1. Mithin sind der Querschlitten 110, der Längsschlitten 115 und der Vertikalschlitten 120 in zueinander orthogonalen Richtungen verfahrbar.

An der dem Maschinenständer 105 zugewandten Ende des Vertikalschlittens 120 befindet sich ein Werkzeugträgermittel 125, an dem ein hier nicht gezeigten Werkzeug, beispielsweise ein Fräser, aufgenommen und drehbar um eine parallel zu der z-Achse verlaufende Drehachse D1 gelagert werden kann. An dem Maschinenständer 105 seinerseits ist ein Werkstückträgermittel 130 um eine parallel zu der y-Achse verlaufende Drehachse D2 schwenkbar gelagert. An dem dem Werkzeugträgermittel 125 gegenüberliegenden Ende des Werkstückträgermittels 130 befindet sich eine Werkstückaufnahme 135, in der ein hier nicht gezeigtes, zu bearbeitendes Werkstück um eine Drehachse D3 schwenkbar aufgenommen werden kann.

Mithin ist die Hochpräzisions-Werkzeugmaschine 100 dieses Ausführungsbeispiels als 5-achsige Hochpräzisions-Werkzeugmaschine ausgebildet, die sich zusätzlich in einer Einhausung 140, die insbesondere schrankartig ausgebildet sein kann, befindet.

Zum Zwecke einer Ausführung einer linearen Bewegung des Querschlittens 110 gegenüber dem Maschinenständer 105 ist an diesen ein lineares Antriebs- und Führungslager 1 vorgesehen. Zum Zwecke einer Ausführung einer linearen Bewegung des Längsschlittens 115 gegenüber dem Querschlitten 110 ist an diesen ein weiteres lineares Antriebs- und Führungslager 1' vorgesehen. Schließlich ist gemäß diesem Ausführungsbeispiel ein letztes lineares Antriebs- und Führungslager 1" an dem Längsschlitten 115 und dem Vertikalschlitten 120 vorgesehen.

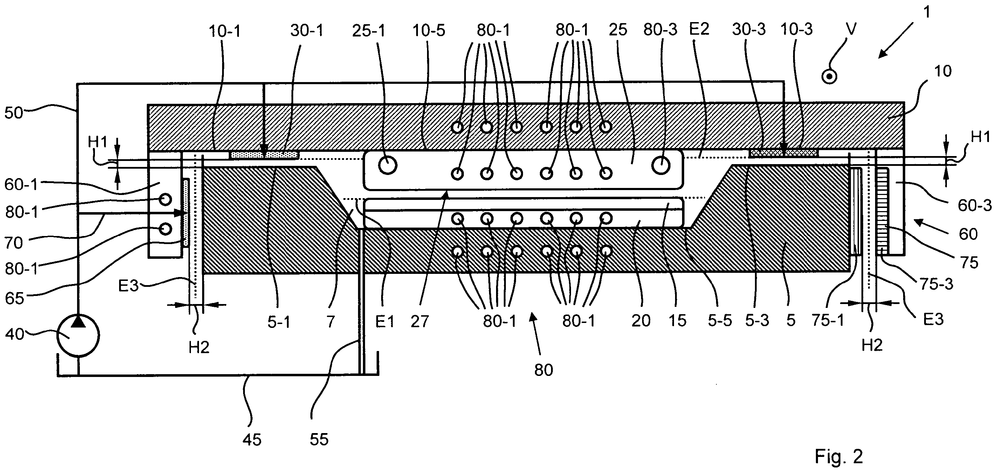

Der Aufbau und die Wirkungsweise der linearen Antriebs- und Führungslager 1, 1' und 1" wird unter Bezug auf die Figuren 2 bis 4 weiter erläutert werden. Bereits an dieser Stelle sei darauf hingewiesen, dass die Antriebs- und Führungslager 1, 1' und 1" als hydrostatische Fluidlager ausgebildet sind, die über eine Pumpe 40 und Fluidleitungen 50 mit einem hier nicht gezeigten Fluid gespeist werden.

Wie der Figur 1 entnommen werden kann, befinden sich die Pumpe 40 und ein das genannte Fluid enthaltendes Reservoir 45 außerhalb der Einhausung 140. Ebenfalls außerhalb der Einhausung 140, und gemäß diesem Ausführungsbeispiel der Pumpe 40 sowie dem Reservoir 45 benachbart, befindet sich ein Temperierungsmittel 80, vermittels dessen ein hier nicht gezeigtes Kühlfluid über Kühlleitungen 80-5 je nach Temperatursituation an einzelne oder alle in der Einhausung 140 befindliche Teile bzw. Komponenten ausgegeben werden kann. Im Einzelnen sind gemäß dem hier gezeigten Ausführungsbeispiel der Maschinenständer 105, der Querschlitten 110, der Längsschlitten 115, der Vertikalschlitten 120, das Werkzeugträgermittel 125, das Werkstückträgermittel 130 und die linearen Antriebs- und Führungslager 1, 1' und 1" fluidisch mit dem Temperierungsmittel 80 verbunden. Darüber hinaus kann auch die Einhausung 140 selbst fluidisch mit dem Temperierungsmittel 80 verbunden sein.

In Figuren 2 bis 4 wird nunmehr exemplarisch ein lineares Antriebs- und Führungslager 1 näher dargestellt. Aufgrund der Tatsache, dass dieses gemäß dem hier gezeigten Ausführungsbeispiel im Aufbau und der Funktion den linearen Antriebs- und Führungslagern 1' bzw. 1" entspricht, wird nachfolgend aus Gründen einer einfacheren Darstellung der Verhältnisse allgemein auf eine Bewegung zweier Maschinenbauteile 5 bzw. 10 abgestellt, wobei nachfolgende Beziehung gilt:

Das lineare Antriebs- und Führungslager 1 dient einer zuverlässigen und präzisen Bewegung des Querschlittens 110, der nachfolgend als Maschinenbauteil 10 bezeichnet wird, gegenüber dem Maschinenständer 105, der nachfolgend als Maschinenbauteil 5 bezeichnet wird. Dementsprechend dient das lineare Antriebs- und Führungslager 1' einer zuverlässigen und präzisen Bewegung des Längsschlittens 115, der als Maschinenbauteil 10 betrachtet werden kann, gegenüber dem Querschlitten 110, der als Maschinenbauteil 5 betrachtet werden kann. In diesem Sinne schließlich dient das lineare Antriebs- und Führungslager 1" einer zuverlässigen und präzisen Bewegung des Vertikalschlittens 120, der als Maschinenbauteil 10 betrachtet werden kann, gegenüber dem Längsschlitten 115, der als Maschinenbauteil 5 betrachtet werden kann.

Wie der Figur 2 zu entnehmen ist, weist das untere Maschinenbauteil 5 eine erste Auflagefläche 5-1, eine hiervon beabstandete zweite Auflagefläche 5-3 und einen zwischen diesen befindlichen ersten Aufnahmebereich 5-5 auf. Letzterer ist gegenüber den beiden Auflageflächen 5-1 und 5-3 vertieft ausgebildet und bildet einen Kanal 7, dessen Funktion später dargelegt werden wird.

Dem gegenüber ist das in der Figur 2 obere Maschinenbauteil 10 auf der dem Maschinenbauteil 5 zugewandten Seite eben ausgebildet und weist einen ersten Aufnahmeabschnitt 10-1, einen hiervon beabstandeten zweiten Aufnahmeabschnitt 10-3 sowie einen zwischen diesen befindlichen zweiten Aufnahmebereich 10-5 auf. Der erste Aufnahmeabschnitt 10-1 befindet sich gegenüber der ersten Auflagefläche 5-1, der zweite Aufnahmeabschnitt 10-3 befindet sich gegenüber dem zweiten Auflageabschnitt 5-3 und der zweite Aufnahmebereich 10-5 befindet sich gegenüber dem ersten Aufnahmebereich 5-5.

Das lineare Antriebs- und Führungslager 1 umfasst einen Magneten 15, der gemäß diesem Ausführungsbeispiel als im Wesentlichen flacher Permanentmagnet ausgebildet und vermittels eines Trägers 20 in dem ersten Aufnahmebereich 5-5 platziert ist. An dem in der Figur 2 oberen Maschinenbauteil 10, und dem Magneten 15 gegenüberliegend, befindet sich eine, einen hier nicht gezeigten Ferritkern aufweisende, Spule 25, die über einen elektrischen Anschluss 25-1 mit einer hier nicht gezeigten Elektronik verbunden ist. Der Magnet 15 und die Spule 25 ziehen die beiden Maschinenbauteile 5, 10 permanentmagnetisch an. Weiter kann die Spule 25 vermittels der Elektronik mit dem Magneten 15 in Wirkverbindung gebracht werden, um mit diesem zusammen einen Linearmotor 27 auszubilden.

Zur Vermeidung einer magnetkraftinduzierten Kollision der beiden Maschinenbauteile 5, 10 sind an dem ersten Aufnahmeabschnitt 10-1 ein erstes hydrostatisches Fluidlager 30-1 und an dem zweiten Aufnahmeabschnitt 10-3 ein zweites hydrostatisches Fluidlager 30-3 angeordnet, die einen durch ein hier nicht gezeigtes Fluid auf die erste Auflagefläche 5-1 bzw. die zweite Auflagefläche 5-3 einwirkenden hydrostatischen Druck ausüben, der der zuvor genannten magnetischen Anziehungskraft entgegenwirkt. Das Fluid wird dabei vermittels der Pumpe 40 aus dem Reservoir 45 durch die Fluidleitung 50 über hier nicht gezeigte hydraulische Vorwiderstände zu den beiden hydrostatischen Fluidlagern 30-1, 30-3 gepumpt, aus denen es in eine hier nicht gezeigte, seitlich abgedichtete, jedoch in Richtung der beiden Aufnahmebereiche 5-1 bzw. 5-3 offene Kammer austritt. Etwaiges Leckfluid (nicht gezeigt), das aus der Kammer austritt, wird in dem Kanal 7 gesammelt und kann bei Bedarf über eine Leckleitung 55 zurück in das Reservoir 45 geführt werden.

Durch das Zusammenspiel von Linearmotor 27 und hydrostatischen Fluidlagern 30-1, 30-3 kann zwischen den beiden Maschinenbauteilen 5, 10 in dem Bereich des ersten Aufnahmeabschnittes 10-1 und des zweiten Aufnahmeabschnittes 10-3 ein erster Lagerspalt H1 eingestellt werden, dessen Höhe gemäß diesem Ausführungsbeispiel 5 $\mu m$ beträgt. Es versteht sich, dass die Höhe des ersten Lagerspaltes H1 erfindungsgemäß auch kleiner als 5 $\mu m$, beispielsweise 3 $\mu m$, oder auch größer, beispielsweise 6 $\mu m$, 7 $\mu m$, 8 $\mu m$, 9 $\mu m$, gemäß der hier vorliegenden Erfindung jedoch maximal 10 $\mu m$, sein kann.

Es ist leicht ersichtlich, dass dieser im Vergleich zum Stand der Technik sehr kleine erste Lagerspalt H1 nicht einfach einzustellen und zu halten ist. Daher ist vorgesehen, dass die beiden Maschinenbauteile 5, 10 jeweils eine erste virtuelle, zueinander parallele Ebene E1 bzw. E2 aufweisen, in der sich der Linearmotor 27 bzw. die hydrostatischen Fluidlager 30-1, 30-3 erstrecken. Insbesondere wird hierdurch eine Kollision der beiden Maschinenbauteile 5, 10 vermieden, wenn diese aufgrund der Aktivität des Linearmotors 27 relativ zueinander in Bewegung versetzt bzw. angehalten werden. Die Bewegung selbst erfolgt dabei, bezugnehmend auf Figur 2, aus deren Papierebene heraus bzw. wieder in diese hinein. Mit anderen Worten ist die Vorschubachse V des Maschinenbauteils 10 orthogonal zur Papierebene ausgerichtet.

Gemäß dem hier gezeigten Ausführungsbeispiel ist das lineare Antriebs- und Führungslager 1 derart ausgebildet, dass sich das als Querschlitten 10 ausgebildete Maschinenbauteil 10 gegenüber dem Maschinenbauteil 5 bewegt, während Letzteres im Stillstand verharrt, da es an dem Maschinenständer 105 fest gelagert ist.

Mit den zuvor offenbarten Mitteln ist eine Führung der beiden Maschinenbauteile 5, 10 in Richtung der Vorschubachse V (mithin der Querrichtung Q) und in Richtung des ersten Spaltes H1 ermöglicht. Zum Zwecke einer seitlichen Führung der beiden Maschinenbauteile 5, 10 ragen von dem Maschinenbauteil 10 ein erster Abschnitt 60-1 bzw. ein hierzu beabstandeter zweiter Abschnitt 60-3 jeweils in einer zu der jeweiligen ersten virtuellen Ebene E1, E2 orthogonalen zweiten virtuellen Ebene E3 in Richtung des Maschinenbauteils 5 derart ab, dass zwischen diesen und dem Maschinenbauteil 5 jeweils ein zweiter Lagerspalt H2 vorhanden ist.

An dem in der Figur 2 links dargestellten ersten Abschnitt 60-1 befindet sich ein als hydrostatisches Lager ausgebildetes Fluidlagermittel 65, das mit dem ihm gegenüberliegenden, durch den Lagerspalt H2 beabstandeten Maschinenbauteil 5 zusammenwirkt. Hierzu ist das Fluidlagermittel 65 vermittels einer Fluidleitung 70 und über hier nicht gezeigte hydraulische Vorwiderstände an die Fluidleitung 50 und die Pumpe 40 angeschlossen, so dass zwischen dem ersten Abschnitt 60-1 und dem Maschinenbauteil 5 eine die beiden voneinander abstoßende mechanische Kraft entsteht. Es sei angemerkt, dass das Fluidlagermittel 65 einem der hydrostatischen Fluidlager 30-1, 30-3 entsprechen kann.

Im Bereich des in der Figur 2 rechts dargestellten zweiten Abschnittes 60-3 befindet sich ein Magnetlagermittel 75, das gegenüber dem Maschinenbauteil 5 ebenfalls einer Abstoßungskraft unterliegt, um einen zweiten Lagerspalt H2 zwischen den beiden zu erzeugen. Hierzu sind an dem Maschinenbauteil 5 eine Magnetleiste 75-1 und, dieser an dem zweiten Abschnitt 60-3 gegenüberliegend, eine ferromagnetische Gegenleiste 75-3 angeordnet. Es versteht sich, dass das Magnetlagermittel 75 alternativ auch als elektromagnetische Vorrichtung ausgebildet sein kann.

Durch eine geeignete Leistung der Pumpe 40, Positionierung und Geometrie bzw. Aufbau des Fluidlagermittels 65 in Abstimmung mit der magnetischen Abstoßungskraft des Magnetlagermittels 75 ist mithin ein sehr genauer zweiter Lagerspalt H2 einstellbar.

Zur weiteren Verbesserung der Maßhaltigkeit des linearen Antriebs- und Führungslagers 1 ist in dem hier gezeigten Ausführungsbeispiel eine Vielzahl von mit dem hier nicht gezeigten Kühlfluid durchströmten Kanälen 80-1 vorgesehen, die fluidisch mit den Kühlleitungen 80-5 verbunden sind. Die Kanäle 80-1 befinden sich in dem Maschinenbauteil 10, der Spule 25, dem Träger 20, dem Maschinenbauteil 5 sowie dem ersten abragenden Abschnitt 60-1, um eine gleichmäßige Temperaturverteilung über das lineare Antriebs- und Führungslager 1 einstellen zu können. Zum Zwecke einer Temperaturmessung ist in der Spule 25 ein Temperaturmessmittel 80-3 untergebracht. Es versteht sich, dass insbesondere die Anzahl, Positionierung und Dimensionierung der Kanäle 80-1 von dem hier vorgestellten Ausführungsbeispiel abweichen können.

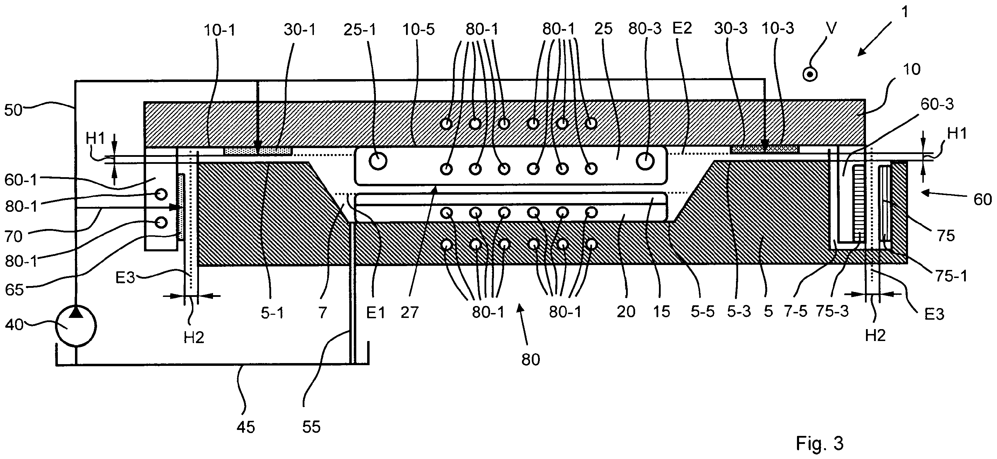

In Figur 3 ist eine gegenüber der in Figur 2 alternative Ausführungsform eines linearen Antriebs- und Führungslagers 1 gezeigt. Der in der Figur 3 rechte Abschnitt des Maschinenbauteils 5 weist eine Aussparung 5-7 auf, an dessen in dieser Figur ebenfalls rechten Flanke eine Magnetleiste 75-1 angeordnet ist. Weiterhin befindet sich der eine Gegenleiste 75-3 aufweisende zweite Abschnitt 60-3 zumindest teilweise und frei beweglich in der Aussparung 5-7. Anders als bei dem unter Bezugnahme auf Figur 2 gezeigten Ausführungsbeispiel sind die Magnetleiste 75-1 und die Gegenleiste 75-3 nunmehr einander anziehend ausgebildet. Im Übrigen entsprechen der Aufbau des linearen Antriebs- und Führungslagers 1 und dessen Funktion demjenigen bzw. derjenigen der in Figur 1 gezeigten Ausführungsform.

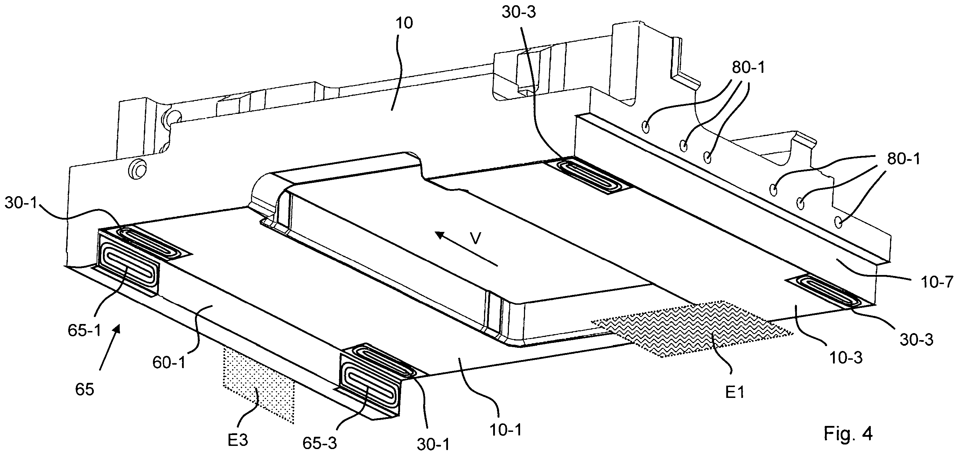

Eine gegenüber der Figur 2 alternative Ausführungsform eines Maschinenbauteils 10 ist in Figur 4 in perspektivischer Unteransicht dargestellt. Wie zu erkennen ist, sind das Maschinenbauteil 10 und der erste abragende Abschnitt 60-1 nunmehr einteilig ausgebildet. Der zweite abragende Abschnitt 60-3 ist in dieser Figur nicht abgebildet und kann an einem an dem Maschinenbauteil 10 befindlichen Befestigungsabschnitt 10-7 montiert werden.

An der Unterseite des Maschinenbauteils 10 und in dessen vier Eckbereichen ist jeweils ein erstes hydrostatisches Fluidlager 30-1 bzw. zweites hydrostatisches Fluidlager 30-3 vorgesehen, die einen gleichen Aufbau besitzen. An dem ersten abragenden Abschnitt 60-1 ist ein Fluidlagermittel 65 angeordnet, das aus zwei voneinander beabstandeten hydrostatischen Fluidlagern 65-1 bzw. 65-2 besteht, die ihrerseits den ersten bzw. zweiten hydrostatischen Fluidlagern 30-1, 30-2 entsprechen. Wie zu erkennen ist, erstrecken sich die hydrostatischen Fluidlager 30-1, 30-3, 65-1 und 65-2 in die gleiche Längsrichtung, die mit der Vorschubachse V bzw. Bewegungsrichtung des Maschinenteils 10 identisch ist.

Anders als in Figur 2 gezeigt sind die Kanäle 80-1 des Temperierungsmittel 80 gemäß Figur 4 nicht in Richtung der Vorschubachse V, sondern quer zu dieser und im Wesentlichen parallel zu der virtuellen Ebene E1 ausgerichtet.

Bezugszeichenliste

| 1, 1', 1" | lineares Antriebs- und Führungslager |
|---|---|
| 5 | Maschinenbauteil |
| 5-1 | erste Auflagefläche |
| 5-3 | zweite Auflagefläche |
| 5-5 | erster Aufnahmebereich |
| 5-7 | Aussparung |
| 7 | Kanal |
| 10 | Maschinenbauteil |
| 10-1 | erster Aufnahmeabschnitt |
| 10-3 | zweiter Aufnahmeabschnitt |
| 10-5 | zweiter Aufnahmebereich |
| 10-7 | Befestigungsabschnitt |
| 15 | Magnet |
| 20 | Träger |
| 25 | Spule |
| 25-1 | elektrischer Anschluss |
| 27 | Linearmotor |
| 30-1 | erstes hydrostatisches Fluidlager |
| 30-3 | zweites hydrostatisches Fluidlager |
| 40 | Pumpe |
| 45 | Reservoir |
| 50 | Fluidleitung |
| 55 | Leckleitung |
| 60 | Lineares Führungsmittel |
| 60-1 | erster Abschnitt |

60-3   zweiter Abschnitt

65   Fluidlagermittel

65-1   hydrostatisches Fluidlager

65-3   hydrostatisches Fluidlager

70   Fluidleitung

75   Magnetlagermittel

75-1   Magnetleiste

75-3   Gegenleiste

80   Temperierungsmittel

80-1   Kanäle

80-3   Temperaturmessmittel

80-5   Kühlleitungen

100   Hochpräzisions-Werkzeugmaschine

105   Maschinenständer

110   Querschlitten

115   Längsschlitten

120   Vertikalschlitten

125   Werkzeugträgermittel

130   Werkstückträgermittel

135   Werkstückaufnahme

140   Einhausung

D1, D2, D3   Drehachsen
E1, E2   erste virtuelle Ebenen
E3   zweite virtuelle Ebene
H   Vertikalrichtung
H1   erster Lagerspalt
H2   zweiter Lagerspalt
L   Längsrichtung
Q   Querrichtung
V   Vorschubachse

x, y, z   kartesische Koordinaten.

**Patentansprüche**

1. Hochpräzisions-Werkzeugmaschine (100) mit mindestens einem Linearantriebsmittel zum Ausführen einer relativen linearen Bewegung zweier an der Hochpräzisions-Werkzeugmaschine (100) befindlichen Maschinenbauteile (5, 10), wobei das mindestens eine Linearantriebsmittel als lineares Antriebs- und Führungslager (1, 1', 1") ausgebildet ist, aufweisend:

- mindestens einen Linearmotor (27), der mindestens einen an einem der Maschinenbauteile (5) angeordneten Magneten (15) und mindestens eine an dem anderen Maschinenbauteil (10) angeordnete, mit dem mindestens einen Magneten (15) wirkverbundene Spule (25) aufweist, wobei der mindestens eine Magnet (15) und die mindestens eine Spule (25) eingerichtet sind, eine gegenseitige Anziehungskraft und eine mindestens zeitweise relative Bewegung zueinander auszuüben,
- mindestens ein an einem der beiden Maschinenbauteile (10) angeordnetes, mit dem anderen Maschinenbauteil (5) wirkverbundenes hydrostatisches Fluidlager (30-1, 30-3), wobei das hydrostatische Fluidlager (30-1, 30-3) eine der Anziehungskraft entgegengerichtete Abstoßungskraft ausübt,
- wobei eines der Maschinenbauteile (5), im Querschnitt betrachtet, eine erste Auflagefläche (5-1), eine hiervon beabstandete zweite Auflagefläche (5-3) und einen zwischen diesen befindlichen ersten Aufnahmebereich (5-5) aufweist, und das andere Maschinenbauteil (10) einen ersten Aufnahmeabschnitt (10-1), einen hiervon beabstandeten zweiten Aufnahmeabschnitt (10-3) sowie einen zwischen diesen befindlichen zweiten Aufnahmebereich (10-5) aufweist, wobei in dem ersten Aufnahmeabschnitt (10-1) mindestens ein erstes, der ersten Auflagefläche (5-1) gegenüberliegendes hydrostatisches Fluidlager (30-1), in dem zweiten Aufnahmeabschnitt (10-3) ein zweites, der zweiten Auflagefläche (5-3) gegenüberliegendes hydrostatisches Fluidlager (30-3), in dem ersten Aufnahmebereich (5-5) der mindestens eine Magnet (15) und in dem zweiten Aufnahmebereich (10-5) die mindestens eine Spule (25) dem ersten Aufnahmebereich (5-5) gegenüberliegend aufgenommen sind,
- wobei die beiden Maschinenbauteile (5, 10) jeweils eine erste virtuelle, zueinander parallele Ebene (E1, E2) aufweisen, in der sich der Linearmotor (27) und das hydrostatische Fluidlager (30-1, 30-3) unter Ausbildung eines ersten Lagerspaltes (H1) erstrecken, und
- eine zu der jeweiligen ersten virtuellen Ebene (E1, E2) geneigte, insbesondere orthogonale, zweite virtuelle Ebene (E3), in der mindestens ein lineares Führungsmittel (60) ausgebildet ist, **dadurch gekennzeichnet, dass**

- der erste Aufnahmebereich (5-5) gegenüber der ersten Auflagefläche (5-1) und/oder der zweiten Auflagefläche (5-3) vertieft ausgebildet ist,
- das lineare Führungsmittel (60) mindestens ein Fluidlagermittel (65) und ein diesem entgegenwirkendes Magnetlagermittel (75) aufweist, und
- die Höhe des zwischen den beiden Maschinenbauteilen (5, 10) ausgebildeten ersten Lagerspalts (H1) größer als 0 μm und kleiner als oder gleich 10 μm ist.

2. Hochpräzisions-Werkzeugmaschine (100) nach Anspruch 1, **dadurch gekennzeichnet, dass** das Fluidlagermittel (65) und das Magnetlagermittel (75) an ein und demselben Maschinenbauteil (10) angeordnet und mit dem anderen Maschinenbauteil (5) wirkverbunden sind.

3. Hochpräzisions-Werkzeugmaschine (100) nach einem der Ansprüche 1 bis 2, **dadurch gekennzeichnet, dass** das den ersten Aufnahmeabschnitt (10-1) und den zweiten Aufnahmeabschnitt (10-3) aufweisende Maschinenbauteil (10) einen ersten abragenden Abschnitt (60-1), in dem ein Fluidlagermittel (65) angeordnet ist, und einen dem ersten abragenden Abschnitt (60-1) gegenüberliegenden zweiten abragenden Abschnitt (60-3) aufweist, in dem ein Magnetlagermittel (75) angeordnet ist, wobei die beiden abragenden Abschnitte (60-1, 60-3) dem anderen Maschinenbauteil (5) unter Ausbildung eines zweiten Lagerspaltes (H2) benachbart sind.

4. Hochpräzisions-Werkzeugmaschine (100) nach einem der Ansprüche 1 bis 3, **dadurch gekennzeichnet, dass** das Magnetlagermittel (75) eine an dem einen Maschinenbauteil (5) befindliche Magnetleiste (75-1) und eine an dem anderen Maschinenbauteil (10) befindliche Gegenleiste (75-3) aufweist, die eingerichtet sind, eine magnetische Abstoßungskraft aufeinander auszuüben.

5. Hochpräzisions-Werkzeugmaschine (100) nach einem der Ansprüche 1 bis 4, **dadurch gekennzeichnet, dass** das Fluidlagermittel (65) mindestens einem hydrostatischen Fluidlager (30-1, 30-3) entspricht.

6. Hochpräzisions-Werkzeugmaschine (100) nach einem der vorhergehenden Ansprüche, **gekennzeichnet durch** mindestens ein mit dieser wirkverbundenes Temperierungsmittel (80).

7. Hochpräzisions-Werkzeugmaschine (100) nach Anspruch 6, **dadurch gekennzeichnet, dass** das mindestens eine Temperierungsmittel (80) in der Hochpräzisions-Werkzeugmaschine (100) selbst oder von dieser beabstandet positioniert ist.

**Claims**

1. High-precision machine tool (100) which has at least one linear drive means for carrying out a relative linear movement of two machine components (5,10) located on the high-precision machine tool (100), the at least one linear drive means being formed as a linear drive- and guide bearing (1, 1', 1"), comprising:

- at least one linear motor (27), which has at least one magnet (15) arranged on one of the machine components (5) and at least one coil (25) arranged on the other machine component (10) and operatively connected to the at least one magnet (15), the at least one magnet (15) and the at least one coil (25) being configured to exert a mutual attraction force and an at least temporarily relative movement in relation to one another,
- at least one hydrostatic fluid bearing (30-1, 30-3) arranged on one of the two machine components (10) and operatively connected to the other machine component (5), the hydrostatic fluid bearing (30-1, 30-3) exerting a repulsive force counter to the attraction force,
- one of the machine components (5), viewed in cross-section, having a first abutment surface (5-1), a second abutment surface (5-3) at a distance therefrom, and a first accommodating region (5-5) located between the abutment surfaces, and the other machine component (10) having a first accommodating portion (10-1), a second accommodating portion (10-3) at a distance therefrom, and a second accommodating region (10-5) located between the accommodating portions, at least one first hydrostatic fluid bearing (30-1) opposite the first abutment surface (5-1) being accommodated in the first accommodating portion (10-1), a second hydrostatic fluid bearing (30-3) opposite the second abutment surface (5-3) being accommodated in the second accommodating portion (10-3), the at least one magnet (15) being accommodated in the first accommodating region (5-5) and the at least one coil (25) being accommodated in the second accommodating region (10-5) opposite the first accommodating region (5-5),
- the two machine components (5, 10) each having a first virtual plane (E1, E2), the virtual planes running parallel to one another, in which plane the linear motor (27) and the hydrostatic fluid bearing (30-1, 30-3) extend to form a first bearing gap (H1), and
- a second virtual plane (E3) which is inclined with respect to the relevant first virtual plane (E1, E2), in particular is orthogonal, in which second plane at least one linear guide means (60) is formed,

**characterized in that**

- the first accommodating region (5-5) is recessed in relation to the first abutment surface (5-1) and/or the second abutment surface (5-3),
- the linear guide means (60) has at least one fluid bearing means (65) and a magnetic bearing means (75) which counteracts the fluid bearing means, and
- the height of the first bearing gap (H1) formed between the two machine components (5, 10) is greater than 0 $\mu$m and less than or equal to 10 $\mu$m.

2. High-precision machine tool (100) according to claim 1,
**characterized in that** the fluid bearing means (65) and the magnetic bearing means (75) are arranged on one and the same machine component (10) and are operatively connected to the other machine component (5).

3. High-precision machine tool (100) according to any of claims 1 to 2, **characterized in that** the machine component (10) which has the first accommodating portion (10-1) and the second accommodating portion (10-3) has a first projecting portion (60-1), in which a fluid bearing means (65) is arranged, and a second projecting portion (60-3) opposite the first projecting portion (60-1), in which a magnetic bearing means (75) is arranged, the two projecting portions (60-1, 60-3) being adjacent to the other machine component (5) to form a second bearing gap (H2).

4. High-precision machine tool (100) according to any of claims 1 to 3, **characterized in that** the magnetic bearing means (75) has a magnetic strip (75-1) located on one machine component (5) and a counter strip (75-3) located on the other machine component (10), which magnetic strip and counter strip are configured to exert a magnetic repulsive force on one another.

5. High-precision machine tool (100) according to any of claims 1 to 4, **characterized in that** the fluid bearing means (65) corresponds to at least one hydrostatic fluid bearing (30-1, 30-3).

6. High-precision machine tool (100) according to any of the preceding claims, **characterized by** at least one temperature control means (80) operatively connected thereto.

7. High-precision machine tool (100) according to claim 6,
**characterized in that** the at least one temperature control means (80) is positioned in the high-precision machine tool (100) itself or at a distance therefrom.

**Revendications**

1. Machine-outil de haute précision (100) comportant au moins un moyen d'entraînement linéaire pour la réalisation d'un mouvement linéaire relatif de deux composants de machine (5, 10) se trouvant sur la machine-outil de haute précision (100), dans laquelle l'au moins un moyen d'entraînement linéaire est réalisé comme un palier d'entraînement et de guidage (1, 1', 1") linéaire, présentant :

- au moins un moteur linéaire (27) qui présente au moins un aimant (15) disposé sur l'un des composants de machine (5) et au moins une bobine (25) disposée sur l'autre composant de machine (10) et en liaison fonctionnelle avec l'au moins un aimant (15), dans laquelle l'au moins un aimant (15) et l'au moins une bobine (25) sont réalisés pour exercer une force d'attraction mutuelle et un mouvement relatif au moins temporaire l'un par rapport à l'autre,
- au moins un palier fluide hydrostatique (30-1, 30-3) disposé sur l'un des deux composants de machine (10) et en liaison fonctionnelle avec l'autre composant de machine (5), dans laquelle le palier fluide hydrostatique (30-1, 30-3) exerce une force de répulsion opposée à la force d'attraction,
- dans laquelle l'un des composants de machine (5), vu en section transversale, présente une première surface d'appui (5-1), une seconde surface d'appui (5-3) espacée de celle-ci et une première zone de réception (5-5) se trouvant entre celles-ci, et l'autre composant de machine (10) présente une première section de réception (10-1), une seconde section de réception (10-3) espacée de celle-ci ainsi qu'une seconde zone de réception (10-5) se trouvant entre celles-ci, dans laquelle au moins un premier palier fluide hydrostatique (30-1) opposé à la première surface d'appui (5-1) est reçu dans la première section de réception (10-1), un second palier fluide hydrostatique (30-3) opposé à la seconde surface d'appui (5-3) est reçu dans la seconde section de réception (10-3), l'au moins un aimant (15) est reçu dans la première zone de réception (5-5) et l'au moins une bobine (25) est reçue dans la seconde zone de réception (10-5) opposée à la première zone de réception (5-5),
- dans laquelle les deux composants de machine (5, 10) présentent respectivement un premier plan virtuel (E1, E2) parallèle l'un à l'autre, dans lesquels s'étendent le moteur linéaire (27) et le palier fluide hydrostatique (30-1, 30-3) en formant un premier interstice de palier (H1), et
- un second plan virtuel (E3), en particulier orthogonal, incliné par rapport au premier plan virtuel (E1, E2) respectif, dans lequel second plan virtuel est réalisé au moins un moyen de guidage linéaire (60),

**caractérisée en ce que**

- la première zone de réception (5-5) est réalisée en creux par rapport à la première surface d'appui (5-1) et/ou à la seconde surface d'appui (5-3),
- le moyen de guidage linéaire (60) présente au moins un moyen formant palier fluide (65) et un moyen formant palier magnétique (75) s'opposant à celui-ci, et
- la hauteur du premier interstice de palier (H1) réalisé entre les deux composants de machine (5, 10) est supérieure à 0 µm et inférieure ou égale à 10 µm.

2. Machine-outil de haute précision (100) selon la revendication 1, **caractérisée en ce que** le moyen formant palier fluide (65) et le moyen formant palier magnétique (75) sont disposés sur un seul et même composant de machine (10) et sont reliés de manière fonctionnelle à l'autre composant de machine (5).

3. Machine-outil de haute précision (100) selon l'une des revendications 1 à 2, **caractérisée en ce que** le composant de machine (10) présentant la première section de réception (10-1) et la seconde section de réception (10-3) présente une première section en saillie (60-1) dans laquelle est disposé un moyen formant palier fluide (65), et une seconde section en saillie (60-3) opposée à la première section en saillie (60-1) dans laquelle est disposé un moyen formant palier magnétique (75), dans laquelle les deux sections en saillie (60-1, 60-3) sont adjacentes à l'autre composant de machine (5) en formant un second interstice de palier (H2).

4. Machine-outil de haute précision (100) selon l'une des revendications 1 à 3, **caractérisée en ce que** le moyen formant palier magnétique (75) comprend une barre magnétique (75-1) se trouvant sur l'un des composants de machine (5) et une contre-barre (75-3) se trouvant sur l'autre composant de machine (10), lesquelles sont réalisées pour exercer une force de répulsion magnétique l'une sur l'autre.

5. Machine-outil de haute précision (100) selon l'une des revendications 1 à 4, **caractérisée en ce que** le moyen formant palier fluide (65) correspond à au moins un palier fluide hydrostatique (30-1, 30-3).

6. Machine-outil de haute précision (100) selon l'une des revendications précédentes, **caractérisée par** au moins un moyen de régulation de température (80) en liaison fonctionnelle avec celle-ci.

7. Machine-outil de haute précision (100) selon la revendication 6, **caractérisée en ce que** l'au moins un moyen de régulation de température (80) est positionné dans la machine-outil de haute précision (100) elle-même ou à distance de celle-ci.

Fig. 1

EP 4 017 679 B1

Fig. 2

EP 4 017 679 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1116549 A2
- DE 69106165 T2
- DE 19803952 A1
- EP 0647788 A1
- DE 29706669 U1